# EUROPEAN PATENT APPLICATION

(11) **EP 3 982 030 A1**
(43) Date of publication of application: **13.04.2022**
(21) Application number: 19932779.2
(22) Date of filing: 10.06.2019
(51) Int. Cl.: F17C 13/04

(54) **FLUID SUPPLY DEVICE**

(71) Applicant: Patched Conics, LLC, Tokyo, 107-0062 (JP)
(72) Inventor: Kawaguchi, Junichiro, Uenohara-shi Yamanashi 409-0126 (JP)
(74) Representative: Dennemeyer & Associates S.A.
(86) International application number: PCT/JP2019/022980
(87) International publication number: WO 2020/250284

(57) **Abstract**

[Problem] When configuring a device for storing and supplying fluid, each components such as vessels, valves/pipes and the like, are placed independently outside a vessel that stores the fluid, and even if these components are small, the volume of the area between the components cannot be effectively used because each of them occupies the surrounding area, and when the total size of the device is limited, it is difficult to ensure a sufficient volume of the vessel that stores the fluid. The present invention provides a design for a configuration of a mechanism consisting of components such as valves/pipes and the like, that functions for storing and exhausting the fluid inside the storage vessel to innovatively improve the volume usage efficiency of the device.

## Description

### Technical Field

In the present invention, a device for supplying fluid (hereinafter referred to as a "device") consists of a vessel for storing the fluid (hereinafter referred to as a "vessel" or a "storage vessel") and a mechanism consisting of valves, pipes, and other components that function as exhausting the fluid (hereinafter referred to as a "mechanism", including valves for filling and exhausting).

The present invention relates to the device for supplying fluid, in which the mechanism consisting of valves, pipes, and other components that function as exhausting the fluid using valves operated manually or electrically and remotely, is constructed, placed, and stored inside the vessel that stores the fluid.

### Background Art

The usual configuration of a device for storing fluid for transport and supplying it includes a vessel for storing the fluid (hereinafter referred to as a "vessel" or a "storage vessel"), valves for filling and exhausting the fluid placed on the vessel's outer-surface or in the contiguous outside, and a mechanism consisting of valves, pipes, and other components that function as exhausting the fluid from the vessel (hereinafter referred to as a "mechanism", including valves for filling and exhausting), wherein valves operated manually or electrically and remotely to control the supply of the fluid are usually placed downstream of an outlet that exhausts the fluid out of the vessel and the outlet to exhaust the fluid is usually placed downstream of the valve.

Obviously in some cases, heat exchangers, pressure reducers and pressurization devices, temporary storage vessels, and the like are installed within the above mechanism. The feature of the background art is in that the vessels, mechanisms, and other components independently constitute the device, and the device results in reducing the efficiency of volume utilization.

Japanese Patent Laid-Open No. 2009-199790 In the above invention, the mechanism consisting of valves, pipes, and other components that function as exhausting the fluid is installed outside the vessel that stores the fluid to be exhausted, and does not disclose a means of solving the problem of constructing the mechanism inside the vessel as claimed in the present invention.

Japanese Patent Application Laid-Open No. 62-119313 In the above invention, the mechanism consisting of valves, pipes, and other components that function as exhausting the fluid is installed outside the vessel that stores the fluid to be exhausted, and does not disclose a means of solving the problem of constructing the mechanism inside the vessel as claimed in the present invention.

### Citation List

### Patent Literature

Patent Literature 1: Japanese Patent Application Laid-Open No. 2009-199790
Patent Literature 2: Japanese Patent Application Laid-Open No. 62-119313

### Non Patent Literature

### Summary of Invention

### Technical Problem

In the aforementioned background art, since the shape of each component of the mechanism with vessels and components such as valves and pipes that constitute the device is determined independently, the void volume between the components cannot be used effectively, and it is difficult to ensure the sufficient volume of the vessel that stores the fluid to be exhausted, unless the size of the mechanism is significantly smaller than that of the vessel storing the fluid to be exhausted.

This leads to a significant decrease in efficiency of volume utilization in small devices for supplying fluid such as onboard satellites.

### Solution to Problem

The solution to this problem is to build the mechanism consisting of valves, pipes, and other components that function as storing and exhausting the fluid to be exhausted inside the vessel, which is described in the present invention.

The device in the present invention is assumed to be sealed and used once it is filled. The device has a vessel to store the fluid and inside of it is the mechanism consisting of valves, pipes, and other components that function as exhausting the fluid, including the valves operated manually or electrically and remotely for exhausting the fluid, wherein outside of the vessel are only an inlet for filling the fluid, an outlet for exhausting the fluid, the levers (operation parts) to operate the valves for those operated manually, or the terminals to exchange power or electrical signals to operate the valves for those operated electrically and remotely, and provides the solution.

The shape of the vessel that stores the fluid can be any shape, such as prism, sphere, or cylinder.

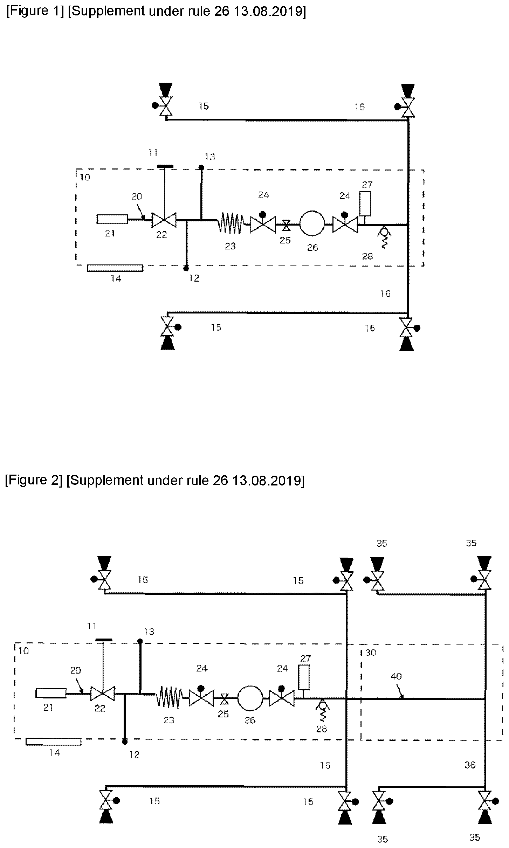

The simplest configuration example is shown in Figure 1. Fluid to be exhausted is stored in the vessel 10. The mechanism consisting of valves, pipes, and other components that function as exhausting consists of a filter 21, a hand valve 22, a heat exchanger 23, an electrically and remotely operated valve 24, an orifice or a pressure reducer valve 25, a vessel to store fluid temporarily 26, a pressure sensor 27, a safety valve 28, and the like, which are connected via a pipe 20 placed inside the fluid storage vessel. The fluid is exhausted out of the storage vessel through a pipe outlet 16. The retrieved fluid is fed to nozzles 15 for utilization.

The components that constitute the mechanism constructed in a vessel to store fluid are not limited to the components described in Figure 1, nor are the positions and the order of the components limited to the configuration in Figure 1.

A fill valve 13 and a drain valve 12 cannot be distinct. In a pre-sealed vessel, it is possible that there may be neither the fill valve 13 nor the drain valve 12.

The number and shape of the nozzles for utilization 15 are not limited to Figure 1, and the operation method can be configured in arbitrary way, such as manually or remotely.

Figure 2 shows a configuration in which the fluid storage vessel 10 is connected to an adjacent augmented fluid storage vessel 30, and both vessels are used as a single vessel. The original fluid storage vessel 10 is connected to the augmented vessel 30 with a pipe 40 that is placed inside the augmented vessel via the outlet 16, and the fluid is supplied to nozzles 35 for utilization via an outlet 36.

The present invention, in a configuration of the aforementioned mechanism, claims a device and a method to exhaust fluid, characterized by the feature that at least either or both of the hand valve 22 having an external operation part 11 and the like and the electrically and remotely operated valve 24 via a terminal 14 for electrical input and output of power or signals are located in the vessel 10.

In addition to the aforementioned operation components for the hand valve and the terminal for the electrically and remotely operated valve, the present invention claims the device and the method in which there is the fill valve 13, the drain valve 12, and the pipe outlet 16 to the outside of the vessel that stores the fluid.

The fill valve 13 and the drain valve 12 cannot be distinct. In a pre-sealed vessel, it is possible that there may not be the fill valve 13 or the drain valve 12.

### Effect of Invention

This type of device can dramatically increase the efficiency of volume utilization and improve the difficulty in securing the volume of a vessel to store fluid to be exhausted.

The present invention makes it possible to standardize the shape of the vessel in modular way, which will enable a variety of applications.

The shape of the vessel that stores the fluid can be arbitrary shape, such as prism, sphere, or cylinder, which makes it possible to install the vessel of arbitrary shape that meets the system requirements to which the invention is applied with high efficiency of volume utilization.

### Brief Description of Drawings

[Figure 1] Figure 1 is a diagram illustrating a configuration example of a device in which a mechanism consisting of valves, pipes, and other components that function as exhausting fluid is constructed inside a vessel that stores the fluid.
[Figure 2] Figure 2 is a diagram illustrating a configuration example for augmented device by modularized components.
[Figure 3] Figure 3 is a diagram illustrating an example of a mechanism consisting of valves, pipes, and other components that function as exhausting the fluid into a prismatic vessel.
[Figure 4] Figure 4 is a diagram illustrating an example of a mechanism consisting of valves, pipes, and other components that function as exhausting the fluid into two consecutive prismatic vessels.
[Figure 5] Figure 5 is a diagram illustrating an example of a mechanism consisting of valves, pipes, and other components that function as exhausting the fluid into four adjacent prismatic vessels.

### Description of Embodiments

The present invention does not designate whichever fluid to be exhausted and supplied is liquid or gas. The present invention accepts whichever the fluid to be exhausted and supplied is liquid or gas.

The present invention is particularly useful for liquefied gas with low vapor pressure. The low vapor pressure makes it possible to use a prismatic (rectangular or cubic) vessel itself as a storage vessel, leading to a significant improvement of the efficiency of volume utilization.

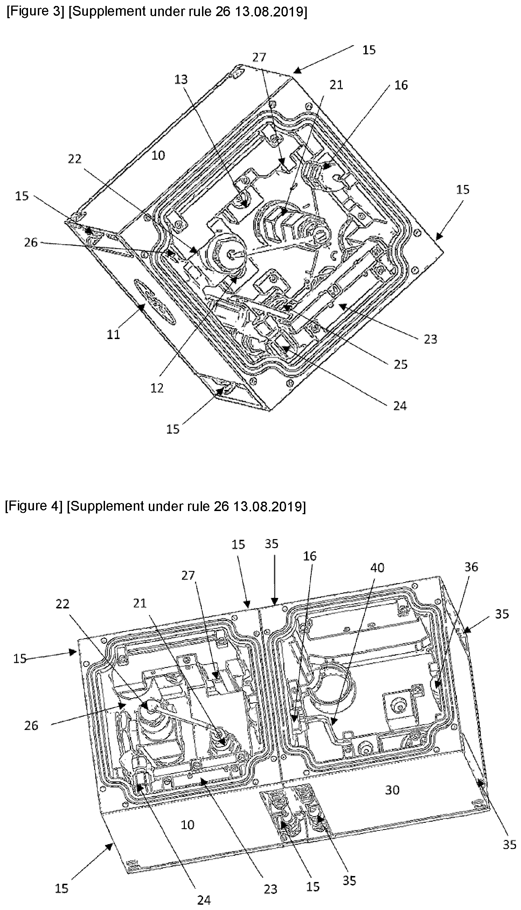

Figure 3 shows an example of the implementation in a cube-type thruster for micro satellites. Herein, "fluid" denotes a propellant. The cube-type thruster is a device, and a cube-shaped box is a vessel. The size of the vessel is 10cm × 10cm × 10cm. Some components, such as safety valves and terminals, which cannot be shown in the figure, are omitted from the diagram.

In such micro thrusters, it is not easy to provide a vessel of sufficient volume to store propellant fluid, even if the components are small, because each component occupies the bottom area and height. Even if it is possible, the amount of fluid that can be stored is very much limited because the volume is proportional to the cube of the length scale.

This difficulty can be overcome with the present invention.
As shown in the figure of example configuration, implementing all the components of the mechanism inside the box makes it possible to store for transport about 600cc to 700cc of fluid by filling the entire box with the propellant fluid.

The components that are exposed to the outside of a vessel are only a rotating knob that operate a hand valve, a terminal for electrical operation, a fill valve, an exhaust valve, and an outlet that directs the propellant to the outlet of the vessel as a final step.

The propellant fluid can be gas, liquid, or liquefied gas, or the like. As described above, in the cube-type vessel in the example configuration, low-pressure gas or liquefied gas with low vapor pressure are the most preferable propellant.

Additionally, a prismatic vessel makes it possible to develop an arbitrary augmentation of the system, the device.

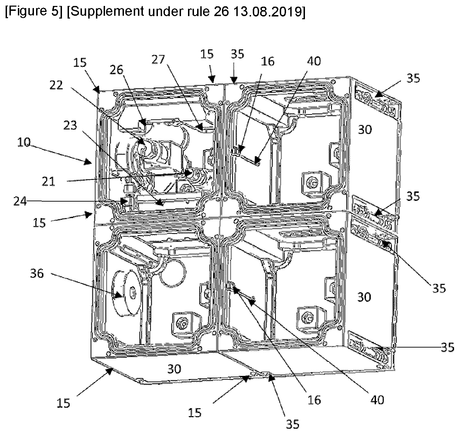

Figure 4 shows an example in which two cube-type thrusters are connected. Figure 5 shows an example in which four cube-type thrusters are connected. Augmented vessels can store the fluid nearly 100% in terms of the volume.

### Industrial Applicability

Especially for micro satellites, the transportation cost depends not only on the mass, but also on the overall density or in other words on the efficiency of volume utilization significantly.

The present invention will lead to a dramatic improvement in the efficiency of the volume utilization, which will in turn contribute to lowering the transportation cost.

The present invention will lead to a standardization of the shape of the device and the vessel, which will make it easy to augment the device module by nodule, leading to a variety of applications.

## Claims

1. A device for supplying fluid, wherein
there is a vessel for storing fluid to be supplied, inside of which a mechanism consisting of valves, pipes, and other components that function as exhausting the fluid is contained, and the mechanism includes valves operated manually or electrically and remotely for exhausting the fluid, and outside of the vessel there are an inlet for filling the fluid, an outlet for exhausting the fluid, and either or both of operation parts for a hand valve or a terminal to exchange electrical signals for the valves operated electrically and remotely to exhaust the stored fluid.

2. The device for supplying fluid according to claim 1, wherein
an inlet for filling fluid and an outlet for exhausting the fluid are identical.

3. The device for supplying fluid according to claim 1, wherein
either or both of an inlet for filling fluid or an outlet for exhausting the fluid are omitted.

4. The device for supplying fluid according to claim 1, wherein
fluid is gas.

5. The device for supplying fluid according to claim 1, wherein
fluid is high-pressure gas.

6. The device for supplying fluid according to claim 1, wherein
fluid is liquefied gas.

7. The device for supplying fluid according to claim 1, wherein
a mechanism includes a heat exchanger.

8. The device for supplying fluid according to claim 1, wherein
the mechanism contains a vessel for temporary storage of the fluid that has passed through the mechanism, or other vessels to store the fluid separately.

9. A method for supplying fluid, wherein
there is a vessel for storing the fluid to be supplied, inside of which a mechanism consisting of valves, pipes, and other components that function as exhausting the fluid is contained, and the mechanism includes valves operated manually or electrically and remotely for exhausting the fluid, and outside of the vessel there are an inlet for filling the fluid, an outlet for exhausting the fluid, and either or both of operation parts for the hand valves or terminals to exchange electrical signals for the valves operated electrically and remotely to exhaust the stored fluid.

## Amended claims

### Amended claims under Art. 19.1 PCT

1. [Amended] A device for supplying fluid, wherein
the feature is characterized that there is a vessel to store fluid to be supplied, and all the following mechanisms to exhaust the stored fluid are built inside the vessel, such as, main parts of a hand valve except for openings and an operation part, main parts of a valve operated electrically and remotely except for openings, pipes except for openings, a heat exchanger connected to the valves and pipes, a storage vessel for temporally use, a pressure sensor, a safety valve, and other accessories that function as exhausting the fluid, and the outside of the vessel, components exposed are limited to the opening for filling the fluid, or the opening for exhausting the fluid, or the operation part for the hand valve or a terminal to exchange electrical signals for a valve operated electrically and remotely.

2. [Amended] The device for supplying fluid according to claim 1, wherein
an opening for filling the fluid and an opening for exhausting the fluid are identical.

3. [Amended] The device for supplying fluid according to claim 1, wherein
either or both of an exposed opening for filling the fluid or an exposed opening for exhausting the fluid are sealed.

4. The device for supplying fluid according to claim 1, wherein
fluid is gas.

5. The device for supplying the fluid according to claim 1, wherein
fluid is high-pressure gas.

6. The device for supplying the fluid according to claim 1, wherein
fluid is liquefied gas.

7. The device for supplying the fluid according to claim 1, wherein
a mechanism includes a heat exchanger.

8. [Amended] The device for supplying fluid according to claim 1, wherein
the mechanism contains a vessel for temporary storage of the fluid that has passed through the mechanism, or vessels or objects that are not connected to the mechanism but can sacrifice the space utilization of the surrounding area.

9. [Amended] A method for supplying fluid, wherein
the feature is characterized that there is a vessel to store the fluid to be supplied, and all the following mechanisms to exhaust the stored fluid are built inside the vessel, such as, main parts of a hand valve except for openings and an operation part, main parts of a valve operated electrically and remotely except for openings, pipes except for openings, a heat exchanger connected to the valves and pipes, a storage vessel for temporally use, a pressure sensor, a safety valve, and other accessories that function as exhausting the fluid, and the outside of the vessel, components exposed are limited to the opening for filling the fluid, or the opening for exhausting the fluid, or the operation part for the hand valve or the terminal to exchange electrical signals for a valve operated electrically and remotely.

Statement under Art. 19.1 PCT
In the Claim 1, based on paragraphs [0013], [0019], [0020] and [0030] of the description and Figure 1 in the application, components such as valves, pipes and the like are defined as accessories connected to valves or pipes, and the components exposed to the outside of the vessel are limited to clarify the feature that all the mechanisms composed of the accessories, the valves and the pipes are built inside the vessel.

In the Claim 2, based on paragraphs [0011], [0019], [0020], and [0030] of the Description and Figure 1 in the application, the feature of an exposed part is described as an opening to make it clearer.

In the Claim 3, based on paragraphs [0011], [0019], [0020], and [0030] of the description and Figure 1 in the application, the feature of an exposed part is described as an opening to clarify the feature to be sealed.

In the Claim 8, based on the description in paragraphs [0011], [0012], [0034], and [0035] of the description in the application, the feature of the mechanism containing vessels or objects that can sacrifice the space utilization of the surrounding area is clarified.

In the Claim 9, based on paragraphs [0013], [0019], [0020], and [0030] of the description and Figure 1 in the application, components such as valves, pipes, and the like are defined as accessories connected to valves or pipes, it is clarified that all of the mechanisms composed of them are built inside the vessel, also that the components exposed to the outside of the vessel are limited.
